Europäisches Patentamt

European Patent Office

Office européen des brevets

(11) Veröffentlichungsnummer: **0 000 379**
**B1**

(12) **EUROPÄISCHE PATENTSCHRIFT**

(21) Anmeldenummer: **78100321.5**

(22) Anmeldetag: **06.07.78**

(51) Int. Cl.³: **B 23 K 9/20**

(54) Verfahren zum Lichtbogenbolzenschweissen mit Hubzündung, sowie Schweisspistole zur Durchführung dieses Verfahrens.

(30) Priorität: **09.07.77 DE 2731130**

(43) Veröffentlichungstag der Anmeldung:
**24.01.79 Patentblatt 79/02**

(45) Bekanntmachung des Hinweises auf die Patenterteilung:
**07.01.81 Patentblatt 81/01**

(84) Benannte Vertragsstaaten:
**BE CH FR NL**

(56) Entgegenhaltungen:
DE - B - 1 109 803
DE - C - 921 823
FR - A - 1 374 315
GB - A - 794 457
GB - A - 795 481
US - A - 2 315 502
US - A - 2 413 370
US - A - 2 491 479
US - A - 3 736 401
US - A - 3 989 920

(73) Patentinhaber: **Linde Aktiengesellschaft**
**D - 8023 Höllreigelskreuth (DE)**

(72) Erfinder: **Grassmugg, Karl R.**
**Raimundstrasse 11**
**A - 4910 Ried**
**Innkreis (DE)**
**Dörhöfer, Friedrich**
**D - 8919 Greifenberg a.A. (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Verfahren zum Lichtbogenbolzenschweißen mit Hubzündung, sowie Schweißpistole zur Durchführung dieses Verfahrens

Die Erfindung betrifft ein Verfahren zum Lichtbogenbolzenschweißen mit Hubzündung, bei dem der Schweißstelle ein Schutzmedium zugeführt wird, sowie eine Schweißpistole zur Durchführung dieses Verfahrens.

Bekannt ist eine Bolzenschweißpistole (Gm 76 33 143), die an ihrem vorderen freien Ende ein glockenartiges Teil aufweist, das so ausgebildet ist, daß über einen Einlaß in das Teil zugeführtes Schutzgas der Stelle zugeleitet werden kann, an der ein Bolzen auf das Grundmetall aufgeschweißt werden soll. Die Aufschweißstelle soll so durch einen Schutzgasstrom vor der Außenatmosphäre geschützt werden.

Obwohl die das Schutzgas leitenden Kanäle zur Schweißstelle hin orientiert sind, wirken sich der relativ große Abstand der Kanäle zur Schweißstelle und die Verwendung eines gasförmigen Schutzmediums nachteilig aus, da das Schweißbad verlaufen und eine ungleichmäßige Schweißverbindung entstehen kann. Die beschriebene Methode eignet sich hauptsächlich zum Verschweißen von Bolzen kleineren oder mittleren Durchmessers, da beim Verschweißen von Bolzen größeren Durchmessers die beschriebenen Nachteile auftreten.

Für die sichere Verschweißung von Bolzen größeren Durchmessers ist ein Verfahren bekannt, bei dem ein Keramikring die oben beschriebenen Schutz- und Formaufgaben übernimmt. Doch verursacht die Verwendung eines Keramikringes hohe Material- und Lohnkosten.

In der US-PS 2 491 479 ist ein Verfahren zum Lichtbogenbolzenschweißen mit Hubzündung beschrieben. Dabei wird ein Schutzgas in eine den Schweißbereich umgebende Hülse eingeleitet. Die Hülse besteht aus keramischem Material und hat die Aufgabe, das Schweißgut zusammenzuhalten.

Durch die DE-AS 1 109 803 ist ein Lichtbogen-Bolzenschweißgerät bekannt, bei dem ein Schutzmedium in den Bereich der Schweißstelle gebracht wird. Als Schutzmedium wird ein Schweißpulver verwendet.

Der Erfindung liegt die Aufgabe zugrunde, ein Verfahren zu entwickeln, mit dem auch Bolzen größeren Durchmessers kostensparend und mit kurzen Schweißzeiten sicher verschweißt werden können.

Diese Aufgabe wird erfindungsgemäß dadurch gelöst, daß in den Bereich der Schweißstelle ein Schweißpulver und ein Schutzgas geleitet werden.

Die Zuführung eines Schweißpulvers hat den gleichen Zweck wie die Zuleitung eines Schutzgases, doch wird durch das erfindungsgemäße Verfahren mit einem Schweißpulver als Schutzmedium die schützende und formende Wirkung verbessert. So schirmt das die Schweißstelle umgebende Schweißpulver diese Stelle gegen die Atmosphäre ab, wodurch Reaktionen des Schweißbades mit atmosphärischem Sauerstoff unterbunden werden. Darüber hinaus werden in vorteilhafter Weise eine sichere Begrenzung des Lichtbogens und eine verbesserte Schweißbadsicherung erreicht. Auf diese Weise können auch Bolzen größeren Durchmessers ohne Einsatz eines Keramikringes verschweißt werden. Abgesehen von den Materialkosten des nur einmal verwendbaren Keramikringes werden dabei durch das erfindungsgemäße Verfahren auch Zubehörkosten für die Spannelemente eingespart, in die die Keramikringe eingesetzt werden. Da das zeitraubende Auflegen und Entfernen des Keramikringes entfallen kann, sinken ebenfalls die Lohnkosten.

Mit Vorteil wird beim erfindungsgemäßen Verfahren zusätzlich zum Schweißpulver ein Schutzgas als Schutzmedium verwendet. Die Zuführung eines Schutzgases als weiteres Schutzmedium ermöglicht es, durch Wahl bestimmter Schutzgase bzw. Schweißpulver und durch Variationen des Mengenverhältnisses von Schutzgas zu Schweißpulver, das Schutzmedium auf die zu verschweißenden Materialien abzustimmen, und so eine optimale Schweißverbindung zu erreichen.

Mit Vorteil kann der zu verschweißende Bolzen mindestens teilweise eine Umhüllung aus Schweißpulver aufweisen. Mit dieser Methode gelingt es in höchst wirtschaftlicher und einfacher Weise das Schweißpulver in den Bereich der Schweißstelle zu bringen. Zudem vereinfacht sich der Schweißvorgang, da auf ein eigenes Zufuhrsystem bzw. auf die Verwendung eines Keramikringes verzichtet werden kann. Da die Umhüllung der Bolzen bei einem Transport aber leicht beschädigt wird, ist dieses Verfahren nur dann sinnvoll und mit Vorteil anzuwenden, wenn ein Transport der Bolzen nicht vonnöten ist.

Eine Schweißpistole zur Durchführung des Verfahrens weist neben einem Pistolenfuß, einem Bolzenhalter, einer Hubvorrichtung ein in Verbindung mit einem Vorratsbehälter stehendes Zufuhrsystem für das Schutzmedium auf. Das über das Zufuhrsystem geleitete Schutzmedium wird genau in der Höhe des schmelzenden Bolzenendes, also in unmittelbarer Nähe des Schweißbades zugeführt. Zusätzlich ist die Austrittsöffnung zum Bolzen hin orientiert, so daß eine vollständige und wirkungsvolle Abschirmung des Schweißbades gesichert ist. Erfindungsgemäß besteht das Zufuhrsystem aus einem von zwei mit Abstand zueinander und konzentrisch zur Bolzenachse angeordneten Wänden gebildeten Vorratsbehälter für Pulver sowie aus einem einerseits zwischen dem Bolzen und dem Bolzenhalter und andererseits dem Vorratsbehälter für das Pulver liegenden Zwischenraum.

Durch die Zuführung eines Schweißpulvers und eines Schutzgases wird ein Verlaufen des Schweißbades ebenso verhindert, wie ein Reagieren des Schweißbades mit atmosphärischem Sauerstoff. Wie schon beschreiben, wird der Lichtbogen auf den gewünschten Raum begrenzt.

Erfindungsgemäß kann der Vorratsbehälter für Schweißpulver, über den dem Schweißbereich das Schweißpulver zugeleitet wird, mit einem Vorratsbehälter für ein Schutzgas in Verbindung stehen. Über dieses Zufuhrsystem kann dem Bereich der Schweißstelle somit nicht nur ein Schweißpulver, sondern auch ein Schutzgas zugeführt werden. Dies ist von Vorteil, da je nach Art der zu verschweißenden Materialien das Schutzgas zusammen mit einem Schweißpulver aber auch als alleiniges Schutzmedium verwendet werden kann. Als Schweißpulver kommen vor allem Pulver der Unterpulverschweißtechnik oder magnetisierbare Pulver zur Anwendung. Als Schutzgas kommen z.B. Argon, Kohlendioxid sowie die genannten Gase enthaltende Mischgase (Corgonreihe) in Frage.

Die Ausbildung des erfindungsgemäßen Zufuhrsystems wird der jeweiligen Form des Bolzens angepaßt. Insbesondere sind der Querschnitt des Bolzens und der Austrittsöffnung einander ähnlich, so daß der Abstand zwischen Bolzen und Austrittsöffnung entlang des ganzen Bolzenumfangs konstant ist und eine gleichmäßige Zuführung und Verteilung des Schutzmediums gewährleistet ist.

Es ist von Vorteil, daß bei einer erfindungsgemäßen Schweißpistole der Bolzen und der Bolzenhalter von den Wänden des Zufuhrsystem unter Bildung eines Zwischenraums umgeben wird, wobei der Zwischenraum mit einem Vorratsbehälter für Schutzgas in Verbindung steht. Zusätzlich zur Zuführung von Schutzgasen und/oder Schweißpulver über das als Vorratsbehälter für Pulver dienende Zufuhrsystem kann dem Schweißbad über den genannten Zwischenraum ein weiteres Schutzgas zugeführt und damit die schützende und begrenzende Wirkung des Schutzmediums verstärkt werden.

Im folgenden soll eine erfindungsgemäße Vorrichtung anhand schematischer Zeichnungen dargestellt und das erfindungsgemäße Verfahren erläutert werden. Die in den Figuren gleichen Teile sind mit gleichen Bezugsziffern versehen.

Es ziegen:

Figur 1 eine erfindungsgemäße Schweißpistole

Figur 2 und

Figur 3 Bolzen, die eine Umhüllung aus Schweißpulver aufwiesen.

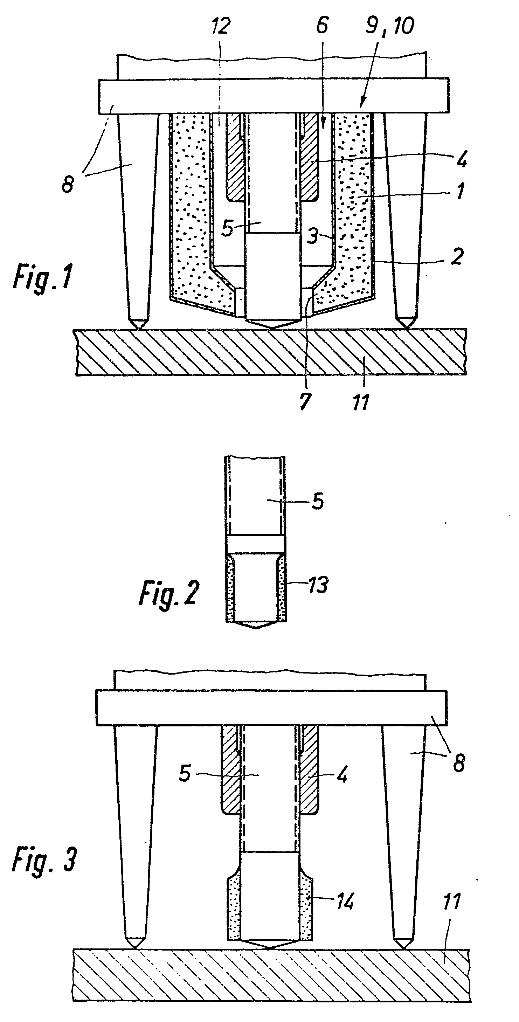

Der in der Figur 1 dargestellte Teil einer Schweißpistole für das Lichtbogenbolzenschweißen mit Hubzündung besteht aus dem Pistolenfuß 8, dem Bolzenhalter 4 und dem Zufuhrsystem 1. Ein mit dem Werkstück 11 zu verschweißender Bolzen 5 wird vom Bolzenhalter 4 getragen, wobei der Bolzen 5 über den Bolzenhalter 4 mit einer nicht dargestellten Hubvorrichtung verbunden ist. Das Zufuhrsystem 1 selbst besteht aus den beiden Wänden 2 und 3, die den Bolzen 5 konzentrisch umgeben, und der Austrittsöffnung 7. Der Abstand zwischen der Austrittsöffnung 7 und dem Bolzen 5 ist an allen Stellen konstant und ermöglicht damit die gezielte Zuführung von Schutzmedien mit den beschreibenen Vorteilen. Das Zufuhrsystem 1 ist mit einem Vorratsbehälter 9 für das Schweißpulver und/oder mit einem Vorratsbehälter 10 für Schutzgas verbunden. Die Wände 2, 3 des Zufuhrsystems 1 umgeben den Bolzen 5 und den Bolzenhalter 4 mit Abstand, wodurch ein Zwischenraum 12 entsteht. Dieser ist einerseits mit einem Vorratsbehälter 6 für Schutzgas verbunden und weist andererseits zum Werkstück hin eine Öffnung auf, deren Form durch den Bolzenquerschnitt und den Querschnitt der Austrittsöffnung 7 festgelegt wird.

Zum Verschweißen wird die Schweißpistole mit dem Pistolenfuß 8 auf das Werkstück 11 aufgesetzt. Vor dem Beginn des Schweißvorganges, bevor also der Bolzen 5 durch die Hubvorrichtung angehoben und der Lichtbogen zwischen Bolzen 5 und Werkstück 11 gezündet wird, erfolgt die Zuführung des Schutzmediums. Über das Zufuhrsystem 1 und den Zwischenraum 12 zwischen dem Zufuhrsystem 1 und dem Bolzen 5 wird in der beschriebenen Weise Schweißpulver und Schutzgas zugeführt. Es gibt folgende Möglichkeiten, ein Schutzmedium zuzuführen:

a) nur Schutzgas, entweder über Zufuhrsystem 1 und/oder über den Zwischenraum 12,

b) nur Pulver über Zufuhrsystem 1

c) Pulver und Schutzgas über Zufuhrsystem 1 bzw. Zwischenraum 12.

Der Verbrauch an Schutzgas bzw. an Schweißpulver kann dadurch sparsam gestaltet werden, daß das Schweißpulver und die Schutzgase nur unmittelbar vor einem Schweißvorgang zugeleitet werden.

Nach Zündung des Lichtbogens schmelzen die Bolzenstirnfläche und das Werkstück 11 an. Der Bolzen 5 wird mit Druck in das Schweißbad eingetaucht und die Stromquelle abgeschaltet. Das das Schweißbad umgebende Schweißpulver und das Schutzgas formen die seitlich weggedrückte Schmelze zu einem Wulst und nehmen die beschriebenen Schutz- und Begrenzungsaufgaben wahr.

In den Figuren 2 und 3 sind Bolzen dargestellt, an die Schweißpulver 13, 14 direkt durch Pressen, Tauchen oder Verstemmen angebracht wurde, wie es bei Stabelektroden üblich ist.

## Patentansprüche

1. Verfahren zum Lichtbogenbolzenschweißen mit Hubzündung, bei dem der Schweißstelle ein Schutzmedium zugeführt wird, dadurch gekennzeichnet, daß in den Bereich der Schweißstelle ein Schweißpulver und ein Schutzgas
geleitet werden.

2. Verfahren nach Anspruch 1, dadurch gekennzeichnet, daß der zu verschweißende
Bolzen mindestens teilweise eine Umhüllung
(13, 14) aus Schweißpulver aufweist.

Schweißpistole zur Durchführung des Verfahrens nach Anspruch 1 oder 2, mit einem
Pistolenfuß (8), einem Bolzenhalter (4), einer
Hubvorrichtung und einem in Verbindung mit
einem Vorratsbehälter stehenden Zufuhrsystem für das Schutzmedium, wobei das
Zufuhrsystem in Höhe des schmelzenden
Bolzenendes eine zum Bolzen (5) hin orientierte
Auslaßöffnung (7) aufweist, dadurch gekennzeichnet, daß das Zufuhrsystem aus einem von
zwei mit Abstand zueinander und konzentrisch
zur Bolzenachse angeordneten Wänden (2, 3)
gebildeten Vorratsbehälter (1) für Pulver sowie
aus einem einerseits zwischen dem Bolzen (5)
und dem Bolzenhalter (4) und andererseits dem
Vorratsbehälter (1) für das Pulver liegenden
Zwischenraum (12) besteht, wobei der Vorratsbehälter (1) für Schweißpulver und/oder der
Zwischenraum (12) mit einem Vorratsbehälter
für Schutzgas verbunden sind bzw. ist.

**Revendications**

1. Procédé de soudage de goujons à l'arc
électrique, amorcé par déplacement du goujon,
dans lequel un agent protecteur est introduit
dans la zone de soudage, procédé caractérisé en
ce qu'on canalise vers la zone de soudage une
poudre de soudage et un gaz protecteur.

2. Procédé selon la revendication 1, caractérisé en ce que le goujon à souder comporte au
moins partiellement un enrobage (13, 14) formé
de poudre de soudage.

3. Pistolet de soudage pour la mise en oeuvre
du procédé selon la revendication 1 ou 2, comportant un pied (8), un porte-goujon (4), un dispositif d'entraînement et un système d'admission d'agent protecteur relié à un réservoir
d'alimentation, ledit système d'admission comportant à la hauteur de l'extrémité de goujon à
fondre un orifice de sortie (7) orienté en direction du goujon (5), pistolet caractérisé en ce que
le système d'admission se compose d'un récipient de stockage de poudre (1), constitué par
deux parois (2, 3) placées à une certaine distance l'une de l'autre et disposées concentriquement à l'axe du goujon, et d'un volume
intercalaire (12), que est situé entre, d'une part,
le goujon (5) et le porte-goujon (4) et, d'autre
part, le récipient (1) de stockage de poudre, ce
récipient de stockage de poudre de soudage (1)
et/ou le volume intercalaire (12) étant relié(s) à
un récipient de stockage de gaz protecteur.

**Claims**

1. Process for arc stud welding with retrac-
tion ignition, in which a protective agent is supplied to the welding zone, characterized in that a
welding powder and a protective gas are fed to
the welding zone.

2. Process as claimed in Claim 1, characterised in that the stud which is to be welded is at
least partially provided with a casing (13, 14) of
welding powder.

3. Welding gun for carrying out the process
in accordance with Claim 1 or 2, comprising a
gun base (8), a stud holder (4), stud retracting
means and a supply system for the protective
agent which is connected to a storage container
therefor, wherein at the level of the end of the
stud which is to be melted, the supply system
has an outlet opening (7) which is orientated to-
wards the stud (5), characterised in that the
supply system consists of a storage container
(1) for powder which is formed by two walls (2,
3) which are spaced from one another and
concentrically arranged with regard to the stud
axis, and of an interspace (12) which extends
between the stud (5) and the stud holder (4), on
the one hand, and the storage container (1) for
the powder, on the other hand, the storage container (1) for welding powder and/or the interspace (12) being connected to a storage container for protective gas.

Fig.1

Fig. 2

Fig. 3